(19) Europäisches Patentamt
European Patent Office
Office européen des brevets

(11) Publication number: **0 050 157**
**A1**

(12) # EUROPEAN PATENT APPLICATION

published in accordance with Art. 158(3) EPC

(21) Application number: **81900945.7**

(51) Int. Cl.³: **G 01 N 31/00**, G 01 N 31/10

(22) Date of filing: **07.04.81**

Data of the international application taken as a basis:

(86) International application number: **PCT/JP 81/00080**

(87) International publication number: **WO 81/02929 (15.10.81 81/24)**

(30) Priority: **07.04.80 JP 46707/80**

(43) Date of publication of application: **28.04.82 Bulletin 82/17**

(84) Designated Contracting States: **DE FR GB**

(71) Applicant: **FUJI ELECTRIC CO. LTD., 1-1, Tanabeshinden, Kawasaki-ku, Kawasaki-shi Kanagawa 210 (JP)**

(72) Inventor: **KOCHIWA, Shinichi Fuji Electric Co., Ltd, 1-1 Tanabeshinden, Kawasaki-ku, Kawasaki-shi Kanagawa 210 (JP)**
Inventor: **NAKANISHI, Mikinori Fuji Electric Co., Ltd, 1-1 Tanabeshinden, Kawasaki-ku, Kawasaki-shi Kanagawa 210 (JP)**
Inventor: **HIROSE, Yoshikazu Fuji Electric Co., Ltd, 1-1 Tanabeshinden, Kawasaki-ku, Kawasaki-shi Kanagawa 210 (JP)**

(74) Representative: **Mehl, Ernst, Dipl.-Ing. et al, Postfach 22 01 76, D-8000 München 22 (DE)**

(54) **AMMONIA ANALYSIS APPARATUS.**

(57) An ammonia analysis apparatus comprising an $NH_3$/NO converter and a NO analyzer. A CO-removing apparatus pakked with an oxidation catalyst is provided before the $NH_3$/NO converter, which is operated at 50 to 150°C and 50 000 to 100 000 GHSV, and thus the $NH_3$ concentration is measured continuously and highly accurately without the influence of CO even when large quantities of CO are present.

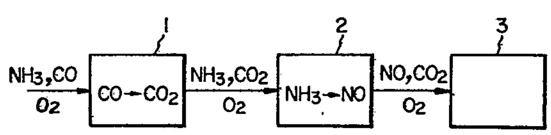


EP 0 050 157 A1

ACTORUM AG

Specification

Title of the Invention

Ammonia gas analyzer

TITLE MODIFIED
see front page

Technical Field

The present invention relates to a gas analyzer for measuring and checking various kinds of components, in particular, an ammonia component, in a waste gas in a continuous manner. In more detail, the invention relates to a means for continually analyzing an ammonia ( $NH_3$ ) of low density in a gas in which an carbon monoxide ( CO ) co-exists with a high density such as several thousands of ppm, for example, in a waste gas from a sintering furnace which is used in a steel facility.

Technical Background

As a means for measuring the density of $NH_3$ in such a waste gas, there has conventionally been known the one in accordance with which $NH_3$ is converted into NO by means of an $NH_3$/NO converter making use of an oxidation catalyst which is kept at a temperature higher than 700 °C pursuant

to an reaction as set forth in the following formula and thus the $NH_3$ is continually detected by means of an NO gas analyzer of a chemical light-emitting type or an infrared type.

$$NH_3 + \frac{5}{4}O_2 \longrightarrow NO + \frac{3}{2}H_2O \qquad (1)$$

This means may be characterized by the fact that it enables the continuous analysis or automatic operation owing to the non-existence of the absorbing operation such as used in a wet method.

Such an analyzing method or means essentially requires that the measurement of the $NH_3$ is not disturbed by the various kinds of co-existent components ( , for example, $NO_x$ , $SO_x$, $H_2O$, CO, $CO_2$, $O_2$ and the like ) in the waste gas.

As a method to remove the $NO_x$ from its source, there has recently been adopted a dry denitrification method by $NH_3$. This method consists of a step of introducing the $NH_3$ into an exhaust gas so as to convert the $NO_x$ into the $N_2$ and then rendering the gas harmless. In particular, this method is often applied to a waste gas from a steel facility. In accordance with this method, however, there is a drawback in that some portion of the non-reacted $NH_3$ is exhausted, for example, due to the variance of the $NO_x$ density. Inasmuch as the $NH_3$ is one of the substances under the control of and designated by the law for preventing bad smell, its density must be checked in a continuous manner.

Now, the Table 1 is given in the below in order to

compare the composition of the waste gas from the sintering furnace in the steel facility with those from other facilities. The gas compositions shown in the Table 1 are those prior to effecting the treatment such as desulfurization or denitrification for the exhaust gas.

Table 1

| | $CO_2$ (%) | CO (%) | $O_2$ (%) | $SO_x$ (PPm) | $NO_x$ (ppm) | water component |
|---|---|---|---|---|---|---|
| sintering furnace | 5 | 0.5~1 | 10~15 | 300~500 | 200~300 | 10 |
| coke furnace | 15~18 | Tr | 3~8 | 10~100 | 100~400 | 6.5~35 |
| heating furnace (uniform heating furnace) | 5~7 | Tr | 11 | 100~300 | 180~220 | 12 |
| boiler | 10~13 | Tr | 3~6 | 150~400 | 150~230 | 12 |

As clearly seen from the Table 1, what is characteristic of the composition of the waste gas from the sintering furnace is the fact that 0.5 - 1 % of CO exists despite very much amount of $O_2$ (, for example, 10 - 15 % ). In case the treatment for this waste gas from the sintering furnace is done in accordance with the above-mentioned denitrification method by $NH_3$, some non-reacted $NH_3$ is

contained in the waste gas, in addition to the compositions set forth in the Table 1. The present inventor has studied to continuously analyze the very small amount of $NH_3$ in the waste gas in accordance with the above-mentioned oxidation method to convert the $NH_3$ into NO. As the result of this study, the present inventor has found that the problems as mentioned below are brought about.

1) The CO which co-exists in the waste gas and is of a density of about 5,000 - 10,000 ppm causes such sub-reaction with the $NO_3$ created on the catalyst for converting the $NH_3$ into the NO so as to result in $N_3$ as shown by the following formula, thereby giving a negative error to the measured value of $NH_3$.

$$\left(\frac{1}{x}\right) NO_x + CO \rightarrow \left(\frac{1}{2x}\right) N_2 + CO_2 \qquad (2)$$

$$(x = 1 \text{ or } 2)$$

2) If $NO_x$, $NH_3$, CO or the like co-exist in the gas, the reaction of the formula (2) is easily promoted also between the co-existent $NO_x$ and CO, in addition to the reaction of $NO_x$ and CO as created on the catalyst layer. Furthermore,this sub-reaction easily occurs not only at the catalyst layer but also at the portion for introducing the gas reaching the catalyst layer. Thus, outstanding negative errors are given to the measured value. In order to cope with these problems, the catalyst of such a configuration

as shown in the Japanese Early-Disclosure No. 76289/1979 is used in case the density of CO is lower than 5,000 ppm while the density of $NH_3$ is several tens of ppm, thereby shortening the time that the catalyst layer and the gas are in contact with each other. Otherwise, it is possible to shorten the time for the gas to stay at the gas introduction portion reaching the catalyst layer, thereby suppressing the occurrence of the sub-reaction. However, in case the density of CO is not lower than 5,000 ppm, it has been known that it is impossible to completely refrain from the occurrence of the sub-reaction of the formula (2) even by so doing.

Disclosure of the Invention

Therefore, the purpose of the present invention is to provide an ammonia gas analyzer in which $NH_3$ of a low density in a waste gas is converted into NO by means of a catalyst and the NO is continuously measured using an NO analyzer, characterized in that, even if there are other co-existent gas components, in particular, a much amount of ( more than 2500 ppm ) CO, for example, in the waste gas from a sintering furnace co-exists, the density of $NH_3$ can be continuously measured with a high accuracy without being disturbed by the CO.

In accordance with the present invention, it has been found that a CO removal means is provided ahead of an $NH_3$/NO converter in an ammonia gas analyzer, and the CO removal means is operated at the best condition, thereby making it

possible that the density of $NH_3$ is continuously measured with a high accuracy without being disturbed by the CO.

Brief Description of the Drawings

Figure 1 is a flow-chart showing the arrangement of the ammonia gas analyzer in accordance with the present invention and Figure 2 is a flow-chart of a test equipment for evaluating the efficiency of the CO removal means which is used in the present invention.

The best Mode for practising the Invention

Now, the ammonia gas analyzer in accordance with the present invention will be explained based on a preferred embodiment. As shown in Figure 1, the ammonia gas analyzer in accordance with the present invention is characterized by the arrangement that there is provided a CO removal means 1 for selectively oxidizing the CO in a gas which disturbs the $NH_3$ - NO convertion into $CO_2$ ahead of an $NH_3$/NO converter 2. This CO removal means 1 may be of any configuration and structure. For example, it may be a reaction tube made of a transparent glass. The CO removal means is filled with an oxidation catalyst. The CO is oxidized into $CO_2$ by the co-existent $O_2$ by the reaction set forth in the following formula (3).

$$CO + \frac{1}{2}O_2 \longrightarrow CO_2 \qquad (3)$$

The catalyst which is used for the CO removal means requires the ability as mentioned below.

(a) To have an ability to oxidize CO into $CO_2$ with a high efficiency.

(b) Not to cause the reaction of the above-mentioned formula (2) among $NH_3$, $NO_x$, CO in the gas or the sub-reaction as set forth in the following formulae.

$$NH_3 + \left(\frac{3}{2x}\right) NO_x$$

$$\rightarrow \left(\frac{x+1.5}{2x}\right) N_2 + \frac{3}{2} H_2O \quad (x=1 \text{ or } 2) \qquad (4)$$

$$NH_3 + \frac{3}{4}O_2 \rightarrow \frac{1}{2}N_2 + \frac{3}{2}H_2O \qquad (5)$$

$$NH_3 + \frac{5}{4}O_2 \rightarrow NO + \frac{3}{2}H_2O \qquad (6)$$

(c) Not to make the reaction activity lower due to the co-existent components in the measured gas.

Various kinds of oxidation catalysts have been studied as to whether they possess the abilities as the CO removal means as mentioned above. As the result, it has been found that the catalysts of platinum, paladium, hopcalite and the like show a good efficiency. Above all, it has been found that the catalyst of which an active aluminum bears an platinum is the best one.

In addition, in order that the desired oxidation reaction of CO is selectively promoted without causing the various kinds of sub-reactions as mentioned in the above (b) with respect to the CO removal means, it has been found to be essential that the CO removal means is operated at the predetermined best condition, in addition to the employment of the oxidation catalyst as mentioned above. That is, the CO removal means is heated in such a manner as to be operative generally at a temperature of 40 - 200 °C, preferably 50 - 150 °C. In general, the space-velocity (GHSV) thereof is 40,000 - 120,000, preferably 50,000 - 100,000. In the case of a catalyst of which an aluminum bears a platinum, it is most desirable that the CO removal

means is operative at a temperature of 50 - 150 °C with GHSV of 50,000 - 100,000.

If the temperature is lower than the above-mentioned temperature range, the non-reacted CO flows into the $NH_3$/NO converter since the oxidation of CO is insufficient, thereby causing the sub-reaction as set forth in the formula (2). In addition, the water component condenses in the small holes of the catalyst, thereby lowering the efficiency for removing the CO. On the other hand, if the temperature is higher than the above-mentioned range, the $NH_3$ starts to be resolved in the CO removal means to generate $N_2$ ( formula (5) ), which then reaches the NO analyzer 3 and becomes a cause for resulting in an error. It has been confirmed that the sub-reaction of the formula (4) occurs in the CO removal means if the GHSV is too low and the oxidation reaction of the CO is not sufficient if the GHSV is too high.

The $NH_3$/NO converter 2 which is used in the ammonia gas analyzer in accordance with the present invention may be a well-known converter which is used for converting $NH_3$ into NO. The converter of this kind is filled with $NH_3$/NO convertion catalyst, for example, the catalyst of which the active aluminum, diatomaceous earth, carbon substance and the like bear the platinum copper, cobalt oxide, chromiun oxide and the like. In particular, the most desirable $NH_3$/NO converter is the one with the

platinum catalyst carried by the porous active aluminum as shown in the Japanese Early-Disclosure No. 76289/1979.

The NO analyzer which is employed in the ammonia gas analyzer in accordance with the present invention may be any one employed for the ammonia gas analyzer of this kind. As one preferable NO analyzer, for example, there has been known the one of a chemical light-emitting type or of an infrared rays absorption type.

The ammonia gas analyzer in accordance with the present invention is the one desirable in the practical use for continuously checking the density of $NH_3$ in the waste gas, in particular, such as in the denitrification plant for the waste gas from the sintering furnace. It goes without saying that the ammonia gas analyzer in accordance with the present invention is also applicable to various kinds waste gases in which $NH_3$ and CO co-exist, in addition to the waste gas from the sintering furnace.

In the below, some embodiments of this invention are shown, which are not in limitative sense in any way but merely by example.

Example 1

A means in which a reaction tube made of glass is filled with a catalyst and the tube is inserted into a small electric furnace which is capable of heating the tube up to a temperature of 300 °C or so was used as a CO removal means. Then, an $NH_3$/NO converter (, which is shown in the

Japanese Early-Disclosure No. 76289/1979 ) was provided downstream the CO removal means. Then, from the inlet side of the CO removal means was supplied a test gas which consists of $NH_3$ ( 50 ppm ), CO ( 5000 ppm ), $O_2$ ( 15 % ), water component ( 2 % ) and $N_2$ ( , which occupies the remaining parts ) with the condition that SV = 60,000. The density of NO in the gas from the outlet of the $NH_3$/NO converter was measured using an NO analyzer of an infrared type.

In this method, the efficiencies of three kinds of catalysts, that is, Pt-$Al_2O_5$, Pd-$Al_2O_5$ and hopcalite were checked. The result thereof is shown in the Table 2. The relationship between the temperature for use with the CO removal means and the measured value of the density of NO in the gas from the outlet is shown in the Table 2. In this case, the condition to use the $NH_3$/NO converter was that GHSV = 60,000 and the temperature = 750 °C.

Table 2

| temperature used (°C) | | 30 | 50 | 100 | 150 | 200 | 250 | Ref. example without CO removal means |
|---|---|---|---|---|---|---|---|---|
| the density of NO in the outlet gas (ppm) | $P_1$ catalyst | 41 | 48 | 49 | 48 | 43 | 38 | 34 |
| | $P_d$ catalyst | 35 | 39 | 43 | 47 | 45 | 40 | |
| | hopcalite catalyst | 35 | 38 | 40 | 44 | 46 | 42 | |

As seen from the Table 2, if the temperature of the CO removal means is lower than 50 °C in case the Pt catalyst is used, the non-reacted CO flows into the $NH_3$/NO converter, thereby causing the above-mentioned sub-reaction of the formula (2) since the oxidation of CO is insufficient. On the other hand, if the temperature of the CO removal means is higher than 150 °C, the $NH_3$ starts to be resolved in the CO removal means. As the result, the $N_2$ which can be detected by the NO analyzer is more easily generated ( Ref. the formula (5) ), which becomes an cause for resulting in the negative error in the analysis value of the $NH_3$. In the meantime, the best temperature to be used for the Pb and hopcalite catalysts deviates to a higher temperature side because their oxidation activity of CO at a low temperature is lower than that of the Pt catalyst. However,if higher than 200 °C, the $NH_3$ more easily starts to be resolved into $N_2$. Therefore, the temperature range to be used so that the measured value is obtained with a higher accuracy may become narrow for the Pb and hopcalite catalysts in comparison with the Pt catalyst. In addition, the measuring accuracy for $NH_3$ for the Pb and hopcalite catalysts also become somewhat inferior to that for the Pt catalyst.

Example 2

The same CO removal means as explained in the Example 1 was filled with a Pt-$Al_2O_3$ catalyst so as to constitute the

test equipmentas shown in Figure 2. Reference numeral 1 denotes a CO removal means, reference numeral 2 denotes an $NH_3$/NO converter, reference numeral 3 denotes an NO analyzer and reference numeral 4 denotes a condenser. A test gas of such a composition as to consist of $NH_3$ ( 50 ppm ), CO ( 5000 ppm ), $O_2$ ( 15 % ), water component ( 10 % ) and $N_2$ (, which occupies the remaining parts ) was introduced from the inlet side of the CO removal means with the condition that GHSV = 8000 and the density of NO in the outlet gas was measured. The path indicated by the dotted line in Figure 2 is the one for measuring the density of NO when the gas is not passed through the $NH_3$/NO converter. This path is controlled by switching the cocks at A and B. If this path is used, the density of NO in the gas after having passed through the CO removal means can be measured. The difference between the density of NO thus obtained and the density of NO which is obtained by way of the $NH_3$/NO converter corresponds to the density of $NH_3$. The piping system upstream the condenser is kept at a temperature of 100 °C or so in order to prevent the water component from being condensed. The Table 3 shows the density of NO in the outlet gas when the temperature for the use of the CO removal means is varied.

Table 3

| temperature of the CO removal means | 50°C | 80 | 110 | 140 | 170 | 200 | Ref. example without CO removal means |
|---|---|---|---|---|---|---|---|
| $NH_3$/NO converter used Ⓐ (ppm) | 142 | 149 | 149 | 145 | 120 | 80 | 125 |
| $NH_3$/NO converter not used Ⓑ (ppm) | 95 | 100 | 100 | 98 | 85 | 60 | 100 |
| Ⓐ − Ⓑ (ppm) | 47 | 49 | 49 | 47 | 35 | 20 | 25 |

As seen from the Table 3, the NO indication value which substantially corresponds to the density of $NH_3$ at the inlet can be obtained within the range of about 50 - 150 °C. If higher than 150 °C, only the value which is smaller than the density of NO at the inlet is obtained even in case the $NH_3$/NO converter is not used. This is probably because the sub-reaction of the formula (4) easily occurs at the CO removal means at the value of the co-existent $NH_3$/NO if higher than the above-mentioned density and at the same time, the resolution reaction ( Ref. the formula (5) ) of $NH_3$ into $N_2$ is also easily promoted. Therefore, in case the temperature of the CO removal means is made higher than 150 °C and the gas for the measurement is introduced into the $NH_3$/NO converter, one portion of the $NH_3$ is consumed by the CO removal means at the upstream position in accordance with the formulae (4) and (5). As the result, the density value which can be obtained becomes low in comparison with the density of ( $NH_3$ + NO ) in the inlet gas.

If the temperature which is used is lower than 50 °C, the water component in the gas condenses in the small holes of the catalyst, thereby lowering the ability to remove the CO. From the above, it becomes possible that the density of $NH_3$ is measured with a good accuracy even if CO of a high density co-exists in the gas, provided that the CO removal means is arranged ahead of the ammonia gas analyzer and used within the range of about 50 - 150 °C.

Example 3

The same catalyst and test gas as used in the Example 2 were used, the temperature for use with the CO removal means was kept at a temperature of 110 °C and the GHSV was varied. Then, the variance of the measured value of the density of the NO at the outlet ( , which corresponds to the value of (A) - (B) set forth in the Table 3 of the Example 2, that is, the measured value of the density of $NH_3$ ) was checked. The result thereof is as shown in the Table 4.

Table 4

| GHSV | 20,000 | 40,000 | 60,000 | 80,000 | 100,000 | 120,000 |
|---|---|---|---|---|---|---|
| outlet NO density (ppm) | 35 | 45 | 49 | 49 | 48 | 45 |

* the value of (A) - (B) as shown in the Table 3.

As clearly seen from the Table 4, if GHSV is smaller than 40,000, the sub-reaction of the formula (4) occurs at the CO removal means or the salt ( , for example, $NH_4NO_2$ )

due to the reaction of $NH_3$/NO system starts to be produced, thereby causing a negative error in the measured value of $NH_3$. On the other hand, if the contact time is too short, the oxidation reaction of $CO \longrightarrow CO_2$ does not progress sufficiently and the disturbance by CO occurs at the $NH_4$/NO converter. Therefore, it is desired that the catalyst for the CO removal means is used in a range where the GHSV is 40,000 - 120,000, preferably 50,000 - 100,000.

## Industrial Availability

As above explained, according to the invention, with the ammonia gas analyzer in which $NH_3$ of low density in a waste gas is converted into NO by means of a catalyst and the NO is continuously measured using an NO analyzer, the density of $NH_3$ can be continuously measured with a high accuracy without being disturbed by the CO, even if there are other coexistent gas components, in particular, a much amount of (more than 2500 ppm) CO, for example, in the waste gas from a sintering furnace coexists, so that the ammonia gas analyzer of the invention is a industrially useful one.

Claims

1. An ammonia gas analyzer comprising an $NH_3$/NO converter for converting $NH_3$ contained in a gas into NO and NO-analyzer, characterized in that a CO removal means filled with an oxidation catalyst is provided ahead of said $NH_3$/NO converter, and said CO removal means is operated at a temperature between 50 °C and 150 °C with a Space-velocity of 50,000- 100,000.

2. An ammonia gas analyzer in accordance with claim 1., wherein the CO removal means is a reaction tube of glass.

3. An ammonia gas analyzer in accordance with claim 1., wherein the oxidation catalyst is selected from the group of the catalysts of platinum, paladium and hopcalite.

4. An ammonia gas analyzer in accordance with claim 1., wherein the oxidation catalyst is one of which an active aluminum bears platinum.

FIG. 1

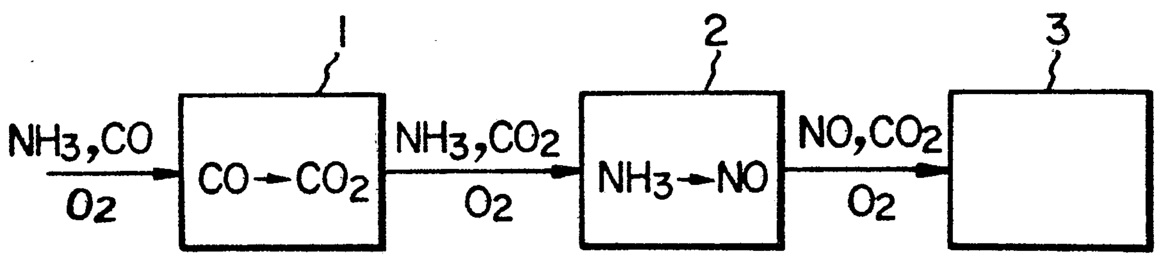


FIG. 2

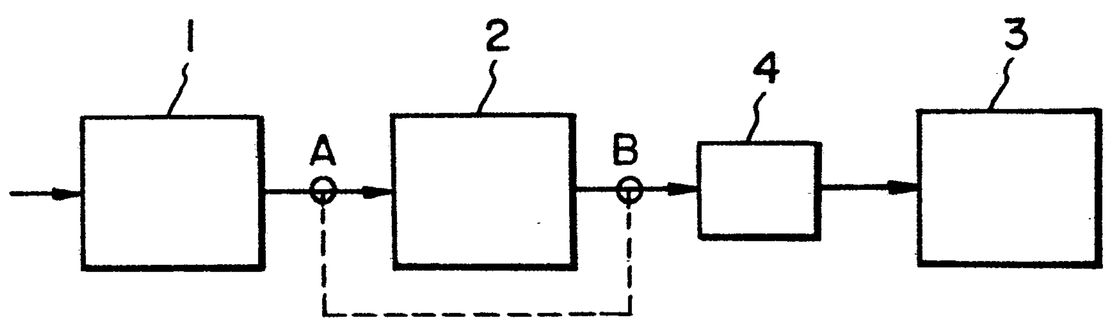

# INTERNATIONAL SEARCH REPORT

0050157

International Application No PCT/JP81/00080

**I. CLASSIFICATION OF SUBJECT MATTER** (if several classification symbols apply, indicate all) [3]

According to International Patent Classification (IPC) or to both National Classification and IPC

Int. Cl.[3] G01N31/00 G01N31/10

**II. FIELDS SEARCHED**

Minimum Documentation Searched [4]

| Classification System | Classification Symbols |
|---|---|
| IPC | G01N31/00, G01N31/10 |

Documentation Searched other than Minimum Documentation to the Extent that such Documents are Included in the Fields Searched [6]

| | |
|---|---|
| Jitsuyo Shinan Koho | 1947 - 1980 |
| Kokai Jitsuyo Shinan Koho | 1971 - 1980 |

**III. DOCUMENTS CONSIDERED TO BE RELEVANT** [14]

| Category * | Citation of Document, [16] with indication, where appropriate, of the relevant passages [17] | Relevant to Claim No. [18] |
|---|---|---|
| A | JP, A, 54-76289, 1979-6-18<br>FUJI ELECTRIC CO., LTD. | 1 - 4 |
| A | JP, A, 52-156690, 1977-12-27<br>Mine Safety Appliances Co. | 3 |

* Special categories of cited documents: [15]

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

**IV. CERTIFICATION**

| Date of the Actual Completion of the International Search [2] | Date of Mailing of this International Search Report [2] |
|---|---|
| June 29, 1981 (29.06.81) | July 6, 1981 (06.07.81) |
| **International Searching Authority [1]** | **Signature of Authorized Officer [20]** |
| Japanese Patent Office | |